# EUROPEAN PATENT APPLICATION

(11) **EP 1 524 540 A1**
(43) Date of publication of application: **20.04.2005**
(21) Application number: 04024097.0
(22) Date of filing: 08.10.2004
(51) Int. Cl.: G02B 7/00, G02B 21/00

(54) **Image observation apparatus**

(30) Priority: 15.10.2003 JP 2003355459
(71) Applicant: Olympus Corporation, Shibuya-ku, Tokyo (JP)
(72) Inventor: Ueda, Masaaki, Sagamihara-shi Kanagawa (JP); Fukaya, Takashi, Tama-shi Tokyo (JP)
(74) Representative: von Hellfeld, Axel, Dr. Dipl.-Phys.

(57) **Abstract**

An image observation apparatus having an image projection unit, an image display for displaying an image that is projected from the image projection unit, and a support mount for supporting the image display unit in a three dimensional space is disclosed. The center for changing the inclination of the image display is located on the image display and the emitting optical axis of the image projection unit also passes through the center. Thereby, the operation for inclining the image display can be easily carried out, and adjustment of the image projection unit in accordance with change of the inclination is not necessary.

## Description

### CROSS-REFERENCE TO RELATED APPLICATION

This application is based upon and claims the benefit of priority from the prior Japanese Patent Application No. 2003-355459, filed October 15, 2003, the entire contents of the application are incorporated herein by reference.

### BACKGROUND OF THE INVENTION

### 1. Field of the Invention

The present invention relates to an image observation apparatus. The present invention is particularly suitable for an image observation apparatus used for observing a minute operative portion in a surgical operation such as a cranical nerve surgery, an eye clinic surgery, and an orthopeclic surgery.

### 2. Description of the Related Art

Conventionally, an operation microscope that can three dimensionally magnify a minute operative portion has been used in a surgical operation for observing a magnified image of the operative portion. Such an operation microscope is configured as a so-called stereoscopic microscope, which has independent right and left observation light paths and a corresponding pair of right and left ocular lenses. An operator can observe a magnified image of the operative portion three dimensionally by looking into each of the ocular lens with the a corresponding eye.

With the stereoscopic microscope, the operator is forced to look into the ocular lenses during the three dimensionally magnified observations. To cope with this problem, an electronic image microscope is proposed in order to ease the confinement of the position and posture during the observation thus allowing the observation in freer position and posture. The electric image microscope converts an optical image into an electric image with an imaging element such as a CCD and displays it on a display part such as a monitor.

In the operation microscope disclosed in a publication of Japanese Patent No. 3209543, two imaging elements (hereinafter, referred to as CCDs) are respectively provided on imaging position of right and left observation light paths in a main body of the microscope. Images are taken as electric images with the CCDs and displayed on a liquid crystal display (hereinafter, referred to as a LCD monitor) provided on the main body of the microscope. Because of this configuration, an operator can observe the image in a more relaxed and comfortable posture.

Further, an operation microscope disclosed in a publication of Japanese Patent No. 3032214 incorporates a pair of right and left CCDs in the lens barrel of the microscope. Electronic images taken by these CCDs can be observed with a separately provided finder or head mount display. Thereby, an operator can perform a three-dimensionally magnified observation in a more relaxed and comfortable position and posture, while keeping a wider working space because of a freer positioning feature of the lens barrel of the microscope.

However, these prior arts have some problems.

In the microscope disclosed in the publication of Japanese Patent No. 3209543, the CCDs are incorporated in the main body of the microscope and the LCD and a back light or the like are mounted on the main body as a display part for displaying images. Therefore, the main body of the microscope becomes inevitably larger and a working space for attending the operative portion by the operator becomes smaller. This may lead to a problem of a lower efficiency of the operation.

In the microscope disclosed in the publication of Japanese Patent No. 3032214, the wider working space is secured by incorporating a CCD into the lens barrel and providing the finder or head mount display (hereinafter, referred to as a HMD) separately. However, in case of using the finder, an arm holding the ocular lenses must be positioned according to the posture of the operator, and the operator must look into the ocular lenses. Therefore, the operator must keep his/her face in the fixed position to the ocular lenses of the finder during the magnified observation of the operative portion, this may cause much fatigue to the operator.

In case of using the HMD, since the HMD always follows the eyes of the operator, he/she need not take unnatural postures for the observation. However, the operator must always wear the HMD having a certain amount of weight, thus he/she may feel much fatigue or pain.

In an operation, the operator repeats a direct observation in which the operative portion is directly observed with naked eyes and a magnified observation in which the microscope is used. When the HMD is used, since the observed image is always magnified, coping with an assistant who supports the operation and performing the operation becomes difficult, thus cause the problem of lowering the efficiency of the operation.

This invention was made considering these situations. The aim of this invention includes providing an improved image observation apparatus which is easy to handle and with which an operator can observe the objective area with a magnified image in a more relaxed and comfortable position and posture.

### BRIEF SUMMARY OF THE INVENTION

An image observation apparatus of this invention comprises an inclined arm composed of a combination of at least two equivalent movement mechanisms, an image display unit that is attached at one end of the inclined arm, and an image projection unit attached to the inclined arm for projecting an image on the surface of the image display unit. In the image observation apparatus, an inclination center of the inclined arm is positioned substantially on the image display unit, and a projection optical axis of the image projection unit passes substantially through the inclination center.

According to the above described structure, when a position and a direction of the image display unit are moved and adjusted with an inclined arm in accordance with a posture of the operator or his/her direction to the operative portion, an image projection unit is moved in cooperation with these position and direction of the image display unit so that an optical positional relation between the image display unit and the image projection unit is maintained as in the initial status.

Thereby, the image projection unit displays the image accurately on the image display unit without interruption. Accordingly, by the simple operation of the positional and/or directional adjustment, a desired image observation becomes possible.

### BRIEF DESCRIPTION OF THE SEVERAL VIEWS OF THE DRAWINGS

These and other features, aspects, and advantages of the apparatus and methods of the invention will become better understood with regard to the following description, appended claims, and accompanying drawings where:
FIG. 1 is a block diagram showing a structure of an image observation apparatus according to a first embodiment of the invention,
FIG. 2 is a layout drawing showing details of an image display unit shown in FIG. 1,
FIG. 3 is a block diagram showing a structure of an image generating unit for generating an observation image to be projected on an imaging unit and the image display unit shown in FIG. 1,
FIG. 4 is a principle view explaining a principle of the image display unit shown in FIG. 1,
FIG. 5 is a conceptual view explaining a state when an observation direction of the image display unit shown in FIG. 1 is changed,
FIG. 6 is a conceptual view showing substantial parts of an image observation apparatus according to a second embodiment of the invention,
FIGS. 7A-7C are detail drawings showing a structure of a display panel shown in FIG. 6, and
FIG. 8 is a block diagram showing a structure of an image observation apparatus according to a third embodiment of the invention.

### DETAILED DESCRIPTION OF THE INVENTION

Preferred embodiments of the invention will be described below with reference to the accompanying drawings.

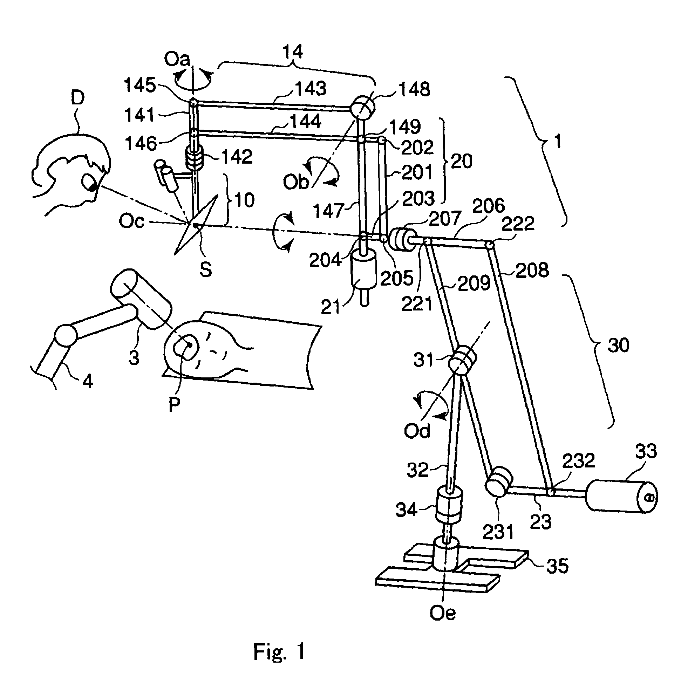

FIG. 1 shows an image observation apparatus according to a first embodiment of the invention. An image display unit 10 is provided and fixed on a support mount 1 at a free position in a three dimensional space. The support mount 1 is composed of a combination of parallelogram links 14 and 20. These parallelogram links are equivalent movement mechanisms and the support mount 1 is an inclined arm, so that it can be said that two equivalent movement mechanisms are combined to configure the inclined arm. The image display unit 10 and the parallelogram links 14 and 20 will be described in detail later. In addition, an imaging unit 3 having an observation optical system is supported and fixed in the vicinity of an operative portion P by a hold arm 4 capable of being moved and adjusted.

In the parallelogram link 14, the image display unit 10 is mounted at the one end of a support arm 141 via a bearing 142. An electromagnetic brake (not shown) is incorporated in the bearing 142, and the bearing 142 can be rotated around a center axis Oa through the electromagnetic brake. The bearing 142 can release and fix the rotational operation of the image display unit 10 around the center axis Oa with the electromagnetic brake controlled via a control circuit (not shown) in cooperation with the operation of an input switch (not shown).

In addition, two arms 143 and 144 are connected to the support arm 141 at substantially right angles, and these two arms are spaced with each other by a predetermined distance. One end of each of the two arms 143 and 144 are attached to the support arm 141 rotatably via bearings 145 and 146. At the other ends of the arms 143 and 144, an arm 147 is provided substantially in parallel with the support arm 141 and is attached rotatably via bearings 148 and 149 to arm 147. An electromagnetic brake (not shown) is incorporated in the bearing 148. The bearing 148 can rotate around a center axis Ob via this electromagnetic brake. In the bearing 148, the operation of the electromagnetic brake is controlled via the control circuit in cooperation with the operation of the input switch. Thereby, the bearing 148 can release and fix the deformation of the parallelogram link 14 in accordance with the rotation of the arm 143 around the center axis Ob (i.e. the incline operation of the support arm 141 around the axis Ob).

An arm 201, which is a part of the parallelogram link 20, is arranged at the other end of the arm 144 substantially in parallel with the arm 147. One end of the arm 201 is connected to the arm 144 rotatably via a bearing 202. An arm 203, which is provided substantially in parallel with the arm 144, is attached to the arms 147 and 201 in a rotatalbe manner via the bearings 204 and 205 respectively. Further, a counter weight 21 is attached near the other end of the arm 147. This counter weight 21 balances weights of the image display unit 10, the parallelogram links 14 and 20 around the axis Oc so that the operator may manipulate these parts with little force.

An arm 206 is attached to the arm 203 in a rotatable manner around the center axis Oc via a bearing 207. This bearing 207 incorporates an electromagnetic brake (not shown) and the arm 206 can rotate around the center axis Oc via the electromagnetic brake. The bearing 207 can release and fix the rotational operation of the arm 203 around the center axis Oc with the electromagnetic brake controlled via the control circuit in cooperation with the operation of the input switch. Due to the rotation of the arm 203 around the center axis Oc, the image display unit 10, the parallelogram links 14 and 20, and the counter weight 21 also rotate around the center axis Oc.

Two arms 208 and 209 are provided on the arm 206 substantially at right angles so that the arms 208 and 209 are separated with a predetermined distance. Each of the two arms 208 and 209 are attached at one end to the arm 206 in a rotatable manner via bearings 221 and 222. At the other end of the arms 208 and 209, an arm 23 is provided substantially at right angles to the two arms 208 and 209, and the two arms 208 and 209 are rotatably coupled to the arm 23 via bearings 231 and 232. In this manner, a parallelogram link 30 is configured. The bearing 231 incorporates an electromagnetic brake (not shown) , and the arm 209 and the arm 23 are rotatable with each other via the electromagnetic brake. In this bearing 231, in cooperation with the operation of the input switch, the operation of the electromagnetic brake is controlled via the control circuit. Thereby, the bearing 231 can release and fix the deformation of the parallelogram link 30 (i.e. this deformation corresponds to the parallel movement operation of the image display 10 along the axis Oc).

A bearing 31 is provided at a middle part of the arm 209. The bearing 31 is rotatably provided on a column 32 around the axis Od. The bearing 31 incorporates an electromagnetic brake (not shown), is rotatable via the electromagnetic brake. The bearing 31 can release and fix the rotational operation around the axis Od of the parallelogram link 30 via the control circuit in cooperation with the operation of the input switch. A counter weight 33 for canceling weights of heavy parts around the axis Od is provided at the one end of the arm 23.

The column 32 is mounted on a base 35 via a bearing 34 in a rotatable manner around an axis Oe. An electromagnetic brake (not shown) is incorporated in this bearing 34 and the bearing 34 is rotatable via the electromagnetic brake. The bearing 34 can release and fix the rotational operation around the axis Oe via the control circuit in cooperation with the operation of the input switch.

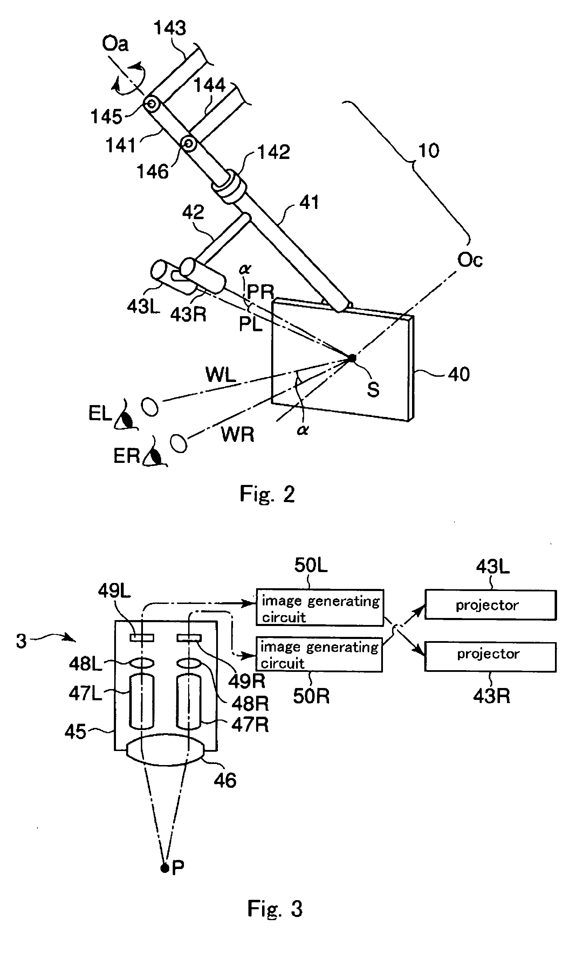

Next, with reference to FIG. 2, the image display unit 10, which is attached and connected to a support arm 141 of the parallelogram link 14 via a bearing 142, will be described. In the image display unit 10, a display panel 40 configured with a Fresnel concave mirror panel is coupled to the support arm 141 rotatably around the center axis Oa via an arm 41. At the middle part of the arm 41, one end of the arm 42 is fixed with a predetermined inclined angle. At the other end of the arm 42, a pair of right and left projectors 43L and 43R, which is an image projection unit, is attached and fixed with a predetermined angle alpha. In this embodiment, emitting optical axes PL and PR of the projectors 43L and 43R intersect with each other at a surface of the display panel 40, and this cross point is also a point where the center axis Oc intersects on the surface of the display panel 40.

The light projected on the display panel 40 through the optical axes PL and PR from the projectors 43L and 43R is guided to a pair of right and left eyes ER and EL of the operator looking at the display panel 40 through incidence optical axes WR and WL.

As shown in FIG. 3, in the imaging unit 3, a housing 45 is attached to the hold arm 4 (refer to FIG. 1). An objective lens 46, which configures an observation optical system, is provided in the housing 45, and a pair of right and left variable magnification optical systems 47L and 47R is incorporated therewith opposing the objective lens 46. The magnification of the pair of right and left variable magnification optical systems 47L and 47R can be varied according to the operator's demands through the operation of an input unit (not shown).

A pair of right and left imaging lenses 48L and 48R are provided facing the pair of right and left variable magnification optical systems 47L and 47R. A pair of right and left imaging elements (CCD) 49L and 49R is provided on the imaging points (focus points) of this pair of right and left image formation lenses 48L and 48R. Through this configuration, the observation optical image taken by the objective lens 46 is magnified with the variable magnification optical systems 47L and 47R and is focused by imaging lenses 48L and 48R on the CCD 49L and 49R, therefore the observation optical image is converted into an electric signal.

A pair of right and left image generating circuits 50L and 50R are connected to the left and right CCD 49L and 49R, respectively. A pair of right and left projectors 43R and 43L are connected to the pair of left and right image generating circuits 50L and 50R, respectively. In this embodiment, the pair of right and left image generating circuits 50L and 50R generates L and R image output signals on the basis of L (left) and R (right) electric signals inputted from CCD 49L and 49R. The image generating circuit 50L outputs an L image signal to the projector 43R, and the image generating circuit 50R outputs an R image signal to the projector 43L. Thereby, the pair of right and left projectors 43R and 43L projects an image on the display panel 40 through respective emitting optical axes PL and PR and displays the image.

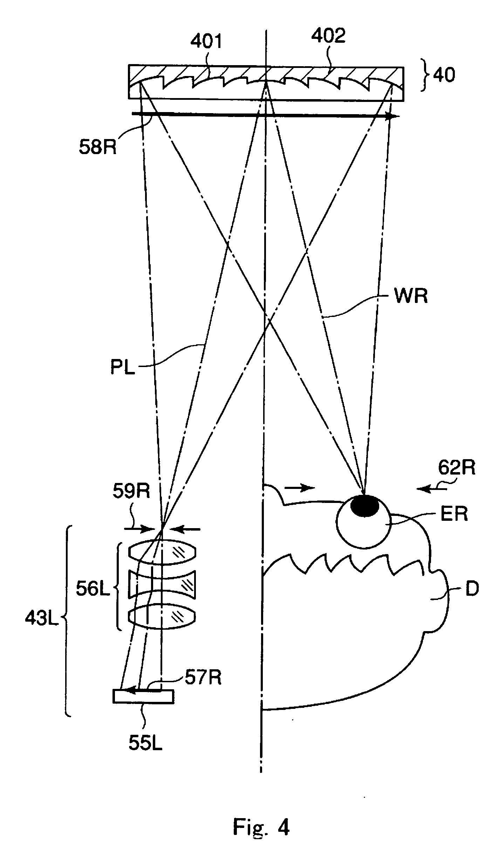

Now, the principle of the optical system of the display panel 40 of the image display unit 10 and the projectors 43L and 43R will be described with reference to FIG. 4. For the convenience of the explanation, in FIG. 4, the right eye ER of an observer (an operator) D and the projector 43L corresponding to the right eye ER of an observer (an operator) D are only illustrated. The explanations with regard to the left eye EL of the observer (the operator) D and the projector 43R corresponding to the left eye EL of the observer (the operator) is omitted but reasoned by analogy.

In the display panel 40, a mirror coating 402 is applied to the rear surface side of the Fresnel concave mirror 401, which has a positive optical power when viewed from the projector side. Therefore, when the observer (the operator) D sees the Fresnel concave mirror 401 at the concave surface side, his/her right eye ER corresponds to the projector 43L. The projector 43L includes an image display element 55L and an image projection optical system 56L with an exit pupil 59R, projects an image 57R displayed on the image display element 55L on the display panel 40 via the image projection optical system 56L, and displays an image 58R thereon. In this configuration, the display panel 40 projects the exit pupil 59R of the image projection optical system 56L on the right eye ER of the observer D by the effects of the Fresnel concave mirror 401.

A reference numeral 62R shown in FIG. 4 corresponds to the exit pupil 59R of the image projection optical system 56L, the Fresnel concave mirror 401 of the display panel 40 projects the exit pupil 59R.

In the above described configuration, at first, the operator D determines the position of the imaging unit 3 to the operative portion p and fixes it by operating the hold arm 4. Next, the operator operates the input switch, releases the electromagnetic brakes provided in respective bearings 142, 148, 207, 231, and 31 of the support mount 1, locates and fixes the display panel 40 at a desired position. In this time, since the weights of the heavy parts including the display panel 40 are cancelled around each rotation axis with the counter weights 21 and 33, the operator may change the position of the display panel 40 without feeling the effects of the gravity.

The light emitted from the operative portion P of the patient is imaged on the CCD 49L and 49R through the objective lens 46 of the imaging unit 3, the variable magnification optical systems 47L and 47R, and the imaging lenses 48L and 48R in a magnification required by the operator D, and converted into an electric signal. Then, on the basis of this electric signal, a pair of right and left observation images are generated by the image generating circuits 50L and 50R. In this pair of right and left observation images, the right observation image 57R is displayed on the image display element 55L provided in the left side projector 43L, projected on the display panel 40 by the image projection optical system 56L as a display image for the right eye 58R, and reflected toward the operator D by the mirror coating 402 of the display panel 40.

The Fresnel concave mirror 401 configuring the display panel 40, with its lens effects, projects the exit pupil 59R of the image projection optical system 56L on the exit pupil 62R of the Fresnel concave mirror 401 (the right eye ER of the operator D) to overlap therewith. The right observation image 57R of the operative portion P, generated by the CCD 49R and the image generating circuit 50R and displayed by the image display element 55L, is introduced to the right eye ER of the operator D as the observation image.

In the same way, the left observation image 57L of the operative portion P, generated by the CCD 49L and the image generating circuit 50L and displayed by the image display element 55R, is projected on the display panel 40 by the projector 43R. Then, the left observation image 57L is introduced only to the left eye EL of the operator D as the observation image. In this configuration, the operator D carries out the three-dimensional observation of the operative portion P by observing the image having right and left parallax independently by the right and left eyes.

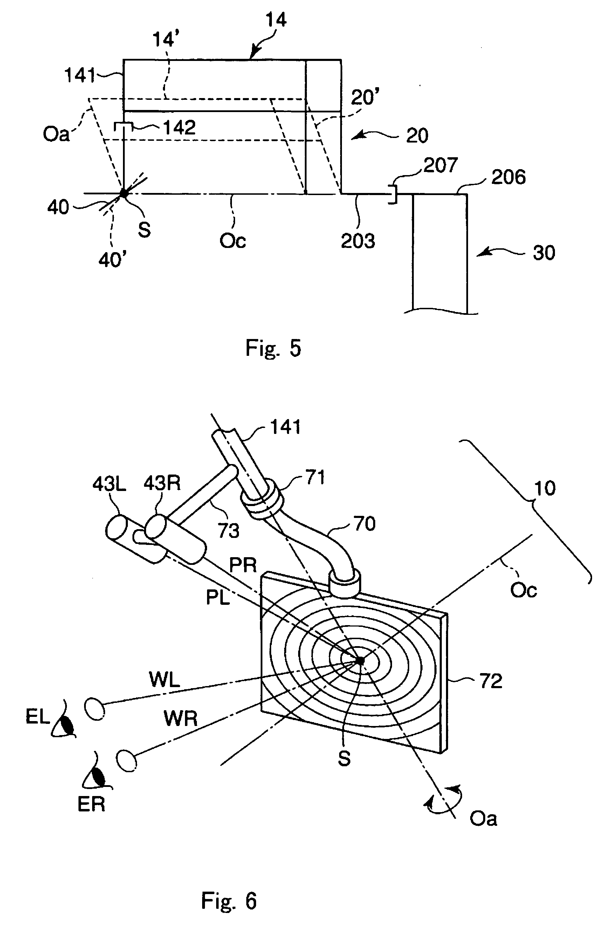

When the operator D changes his/her observation posture such as direction of a face slightly in accordance with the progress of the operation, he/she manipulates the support mount 1 to change the angle of the image display unit 10 and change the direction of the display panel 40. In this process, for example, as shown in FIG. 5, when the parallelogram links 14 and 20 are deformed to the shape as shown by broken lines 14' and 20' , the display panel 40 is also located at a position 40' shown by a broken line. The display panel 40 is inclined at a center of the displayed image (the center point of the displayed image locates on the axis of the inclination). This is because the cross point between the center axis Oc of the arm 203 and the center axis Oa of the support arm 141 is the point S where the emitting optical axes of the pair of right and left projectors 43L and 43R intersect with each other on the display panel 40.

In addition, the pair of right and left projectors 43L and 43R are also inclined following the inclination of the display panel 40 since the pair of right and left projectors 43L and 43R are fixed as one unit with the display panel 40 via the arms 41 and 42 as described above. Thereby, even if the position of the display panel 40 is changed as described above, the optical relative position between the projectors 43L and 43R and the display panel 40 does not change at all and the initial orientation is maintained. Therefore, the operator D can continue the operation successively while observing the operative portion P.

As described above, the image observation apparatus of this embodiment is configured so that the display panel 40 can be inclined around the center of the displayed image without changing positional relationships among the display panel 40 of the image display unit 10 and the projectors 43L and 43R.

In this way, in the case of inclining the inclined arm (the support mount 1) composed of a combination of at least two equivalent movement mechanisms (the parallelogram links 14 and 20) , there can set a point of which inclination is only changed without movement of the spacious position (center of the inclination S). According to the embodiment, since the center of this inclination is located on the display panel 40, only inclination of the display panel 40 can be changed independently, so that the inclination thereof can be easily adjusted. In addition, since the emitting optical axis of the image projection unit (the projectors 43L and 43R) pass through the center S of the inclination, the display panel 40 is inclined around the image display. Therefore, even if the display panel 40 is inclined, it is not necessary to change the setting of the projectors.

Consequently, the display panel 40 can be instantly inclined in accordance with a change in the posture of the operator D, so that it is not necessary to change the setting of the image display unit 10 in accordance with a change in the posture of the operator D. Accordingly, the efficiency of the operation can be improved.

Further, since a cross point of the center axis Oa and the center axis Oc is on the display panel 40, even if the display panel 40 is rotated around the center axis Oa or around the center axis Oc, only the inclination of the display panel 40 is changed and the position of the display panel 40 is unchanged. In addition, the emitting optical axes of the projectors 43L and 43R intersect with each other on the display panel 40, and the intersection point is also the cross point of the two center axes (Oa and Oc). Therefore, the position of the image is not changed in spite of the rotational operations of the two axes (Oa and Oc).

In the first embodiment, the equivalent movement mechanism at the support mount 1 is configured with the parallelogram links 14 and 20, however, the invention is not limited to this specific example. It is also possible to configure the equivalent movement mechanism with a timing belt or a gear for example, and almost the same effect can be expected. In the case that the equivalent movement mechanism is configured with the timing belt and the gear, the arm can be made narrower as compared to the case that the equivalent movement mechanism is configured with the parallelogram links.

Next, a second embodiment of the invention will be described below.

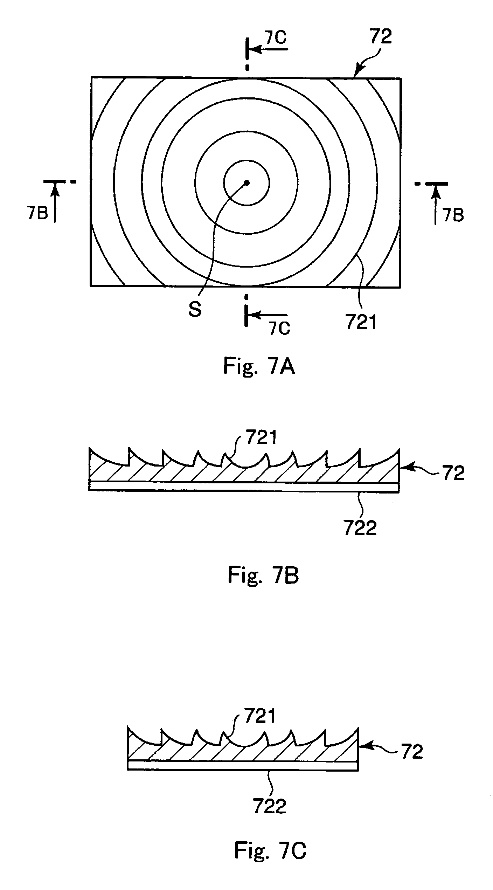

FIGS. 6 and 7A-7C show an image observation apparatus according to the second embodiment of the invention. In FIGS. 6 and 7, the same reference numerals are given to the same parts as FIGS. 1 to 5 that are described above, and the first embodiment should be referenced for the detailed explanations thereof.

In the second embodiment, one end of a connection arm 70 is rotatably connected to the support arm 141 through a bearing 71. The display panel 72 is attached to the other end of this connection arm 70 so that the image display center S of the display panel 72, which configures the image display unit 10, coincides with the cross point of the rotational axis Oa of the bearing 71 and the rotational center axis Oc of the arm 203. In this bearing 71, an electromagnetic brake (not shown) is incorporated and the bearing 71 can rotate via this electromagnetic brake. This bearing 71 can release and fix the rotational operation of the image display unit 10 around the center axis Oa of the connection arm 70 via the control circuit in cooperation with the operation of the input switch.

The pair of right and left projectors 43L and 43R are fixed to the support arm 141 via an arm 73 so that the emitting optical axes PL and PR intersect each other at the image display center S of the display panel 72.

FIGS. 7A-7C show a structure of the display panel 72. FIG. 7A is a plain view of the display panel 72, FIG. 7B is a cross sectional view thereof cut along line 7B-7B of FIG 7A, and FIG. 7C is a cross sectional view along line 7C-7C of FIG 7A. In the display panel 72, a Fresnel concave mirror 721 is provided at the side facing the projector, and a mirror coating 722 is applied to a rear surface side of this Fresnel concave mirror 721. The Fresnel concave mirror 721 is formed so that its center position coincides with the image projection center from the projectors 43L and 43R and its concave curved surface is formed as concentric circles.

In the above structure, an operator D executes the operation of the operative portion P almost in the same manner as described in the first embodiment: locates the imaging unit 3 and the imaging display at desired positions, fixes them, and observes the operative portion three dimensionally.

In the case of changing the display direction of the display panel 72 of the image display unit 10, as substantially same as the first embodiment, the operator operates the input switch and manipulates the parallelogram links 14 and 20 configuring the support mount 1, inclines the display panel 72 so that the inclination center axis passes through the image display center S.

When the operator D intends to change his/her facing direction with respect to the operative portion P, for example when he/she changes the standing position with respect to the operative portion P, the operator D operates the input switch, releases the electromagnetic brake incorporated in the bearing 71 via the control circuit, rotates the display panel 72 around the center axis Oa of the support arm 141. In this instance, in the display panel 72, the center of the Fresnel concave mirror 721 coincides with the rotational center axis Oa of the support arm 141, and the Fresnel concave mirror 721 is shaped in concentric circles, so that the optical positional relation of the display panel 72 and the projectors 43L and 43R is maintained as in the initial status. Therefore, without changing the setting of the image display unit 10, the operator D can continue the three dimensional image observation of the operative portion P without interruptions.

As described above, the second embodiment is configured as follows: the cross point of the center axis Oc which is the axis of the inclination movement of the display panel 72 and the center axis Oa which is the rotation axis of the support arm 141 coincides with the image display center S of the display panel 72; and the image display center S is set at the center of the Fresnel concave mirror 721. According to this structure, even if the position of the operator D with respect to the operative portion P is changed, without changing setting of the image display unit 10, the direction of the display panel 72 can be changed, and thereby, the operation efficiency also can be improved.

Next, a third embodiment according to the invention will be described below.

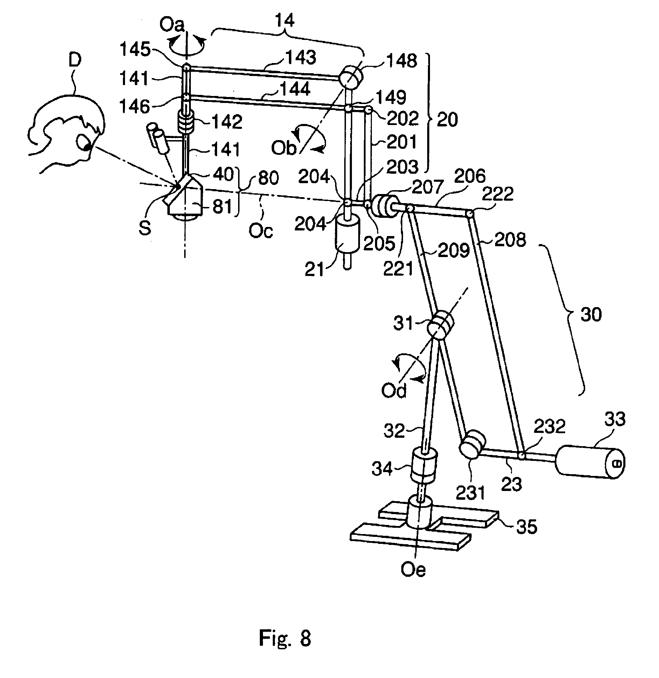

FIG. 8 shows an image observation apparatus according to the third embodiment of the invention. In this third embodiment, every structures except an image display unit 80 is configured approximately identical with the first embodiment, so that the same parts in FIG. 8 are given the same reference numerals as the first embodiment. For the detail explanation thereof, the first embodiment should be referenced.

The image display unit 80 is configured in such a manner that the display panel 40 is mounted on an image microscope 81, and this image microscope 81 is supported by a supporting arm 141 that is connected to the bearing 142.

This image microscope 81 is configured approximately the same as the imaging unit 3 of the first embodiment. For example, an objective lens, a pair of right and left variable magnification optical systems, a pair of right and left image formation lenses, and a pair of right and left imaging elements (CCD) are provided (not shown) in the image microscope 81. The microscope takes the light from the operative portion P with the objective lens and setting it into a desired magnification with the variable magnification optical systems, and forms an observation optical image on the CCD via the imaging lens. The CCD converts the imaged optical image into an electric signal and outputs the electric signal to the image generating circuit. This image generating circuit generates an image signal on the basis of the inputted electric signal and displays the image information on the basis of the image signal on the display panel 40 through projection.

In the above configuration, the operator D locates and fixes the image display unit 80 at a desired position, observes the magnified three dimensional image of the operative portion P taken by the image microscope 81 on the display panel 40, and processes the operative portion P. During the operation, in accordance with his/her change of posture, the operator D moves the image display unit 80, inclines the display panel 40, and rotates the display panel 40 around the center axis Oa. Therefore, he/she sets the display panel 40 in a preferable direction and carries out the operation. The image microscope 81 which is an image taking unit for taking magnified observation images of the operative portion P is moved and inclined with the display panel 40 as one set. Therefore, even if the operator sets the display panel 40 at any position and in any direction, the direction of the image displayed on the display panel 40 is always the same as that of the image of the operative portion observed directly by the operator D.

In the third embodiment, the image observation apparatus is configured in such a manner that the image display unit 80 is integral with the display panel 40 and the image microscope 81. The light from the operative portion P is taken in by the image microscope 81 of the image display unit 80 to generate a magnified observation image, and the same image is directly displayed on the display panel 40.

According to the third embodiment, the magnified observation image of the operative portion P can be observed as an image such that the magnified observation image of the operative portion P is captured from the direction of the operator. Therefore, a real movement of the operator's hands upon processing the operative portion P agrees with movement of the operator's hands displayed on the observation image. As a result, natural operation processing becomes possible, and further, it is possible to improve the operation efficiency.

In the meantime, according to the third embodiment, a pair of right and left variable magnification optical systems is provided in the image microscope in order to perform the magnified observation of the operative portion P, however, the invention is not limited to this configuration. For example, it is also possible to magnify the image taken with the CCD by a so-called electronic zoom in the image generating circuit. Thereby, miniaturization of the image microscope 81 can be promoted to make a wider operation processing space, and this adds a further advantage.

In addition, in the first and second embodiments, it can be configured such that the position of the operator D is detected by a well known navigation system or the like, a driving unit such as a motor is provided at each joint of the hold arm 4 to hold the imaging unit 3, and an image correcting unit to automatically correct the position and the direction of the imaging unit 3 depending on the position of the operator D is provided. Then, it is possible to expect a more effective advantage.

While there has been shown and described what is considered to be preferred embodiments of the invention, it will, of course, be understood that various modifications and changes in form or detail could readily be made without departing from the spirit of the invention. It is therefore intended that the invention be not limited to the exact forms described and illustrated, but should be constructed to cover all modifications that may fall within the scope of the appended claims.

## Claims

1. An image observation apparatus comprising an inclined arm (1) having at least two movement mechanisms (14,20),
**characterized in that** the image observation apparatus further comprising:
an image display unit (10, 80) provided at one end of the inclined arm (1) , wherein the image display unit (10, 80) is provided at a substantially center position (S) of an inclination of the inclined arm (1); and
an image projection unit (43R, 43L) for projecting an observation image to the center position (S) along a projection axis (PR, PL) such that the projection optical axis (PR,PL)coincides with the center position (S).

2. The image observation apparatus according to claim 1, further comprising an imaging unit (3, 81) for imaging a magnified observation image of an operative portion (P), wherein the image projection unit (43R, 43L) projects the observation image on a surface of the image display unit (10, 80).

3. The image observation apparatus according to claim 2, wherein the imaging unit (81) is configured with the image display unit (80) as one unit.

4. An image observation apparatus comprising an inclined arm (1) having at least two equivalent movement mechanisms (14, 20),
**characterized in that** the image observation apparatus further comprising:
an image display unit (10, 80) that is provided at one end of the inclined arm (1); and
an image projection unit (43R, 43L) for projecting an image on a surface of the image display unit (10, 80),
wherein the image display unit (10, 80) is provided at one end of the inclined arm (1) such that the image display unit (10, 80) is directed toward a center (S) of an inclination of the inclined arm (1), and the image display unit (10, 80) can rotate around an axis of the inclined arm (Oa, Oc),
the image projection unit (43R, 43L) is associated with a portion of the inclined arm (1), a projection optical axis (PR, PL) of the image projection unit (43R, 43L) substantially coincides with the center (S) of the inclination of the inclined arm (1) on the image display unit (10, 80), and
the center (S) of the inclination of the inclined arm (1) is provided on the rotation axis (Oa, Oc) of the image display unit (10, 80) provided at the one end of the inclined arm (1).

5. The image observation apparatus according to claim 4, further comprising an imaging unit (3, 81) for imaging a magnified observation image of an operative portion (P),
wherein the image projection unit (43R, 43L) projects the observation image that is obtained by the imaging unit (3, 81) on the surface of the image display unit(10, 80).

6. The image observation apparatus according to claim 5, wherein the imaging unit (81) is configured with the image display unit (80) as one unit.

7. The image observation apparatus according to claim 5, further comprising an image correcting unit (80) for making a direction of an image obtained by the imaging unit (81) correspond with a direction of a projected image projected on the image display unit (80) by the image projection unit (43R, 43L).

8. The image observation apparatus according to claim 4, wherein at least one of the movement mechanisms (14, 20) is configured with a parallelogram link.

9. The image observation apparatus according to claim 4, wherein at least one of the movement mechanisms (14, 20) is configured with a timing belt.

10. The image observation apparatus according to claim 4, wherein the image display unit (10, 80) is configured with a Fresnel concave mirror (401).

11. The image observation apparatus according to claim 10, wherein an optical center position of the Fresnel concave mirror (401) substantially coincides with a projection center (S) position on the image display unit (10, 80) by the image projection unit (43R, 43L).

12. The image observation apparatus according to claim 4, wherein the image projection unit (43R, 43L) is configured with an image projector.

13. An image observation apparatus comprising an inclined arm (1) including a combination of at least two movement mechanisms (14, 20),
**characterized in that** the image observation apparatus further comprising:
an image display unit (10, 80) provided at one end of the inclined arm (1); and
an image projection unit (43R, 43L) associated with the inclined arm (1) for projecting an image on the surface of the image display unit(10, 80);
wherein an inclination center (S) of the inclined arm (1) is positioned substantially on the image display unit (10, 80), and a projection optical axis (PR, PL) of the image projection unit (43R, 43L) passes substantially through the inclination center (S).

14. The image observation apparatus according to claim 13, wherein
the inclined arm (1) includes at least one rotational axis (Oa, Oc) and the rotational axis (Oa, Oc) substantially through the inclination center (S).

15. An image observation apparatus comprising:
an image display unit (10, 80);
a support mount (1) for supporting the image display (10, 80) unit in a three dimensional space; and
an image projector (43R, 43L) for projecting an image on the image display unit (10, 80),
**characterized in that**
the support mount (1) is configured so that the inclination and position of the image display unit (10, 80) can be independently adjusted, and a rotational axis for adjusting the inclination of the image display unit (10, 80) substantially passes through the image display unit (10, 80); and
an emitting optical axis (PR, PL) of the image projector (43R, 43L) substantially intersects with the rotational axis on the image display unit (10, 80).

16. The image observation apparatus according to claim 15, wherein the support mount (1) includes at least one rotational axis (Oa, Oc), and the rotational axis of the support mount substantially intersects with the rotational axis on the image display unit (10,80).

17. The image observation apparatus according to claim 15, wherein the support mount (1) includes a movement mechanism (14, 20).

18. The image observation apparatus according to claim 17, wherein the movement mechanism (14, 20) is a parallelogram link.

19. The image observation apparatus according to claim 15, wherein the image display unit has a Fresnel surface (401), and a cross point (S) of the emitting optical axis (PR, PL) and the rotational axis (Oa, OC) on the image display unit substantially coincides with a center (S) of the Fresnel surface (401).

20. A method for observing an image, comprising:
supporting an image display member (10, 80) in a three dimensional space; and
projecting an image on the image display member (10, 80),
**characterized in that**
the inclination of the image display member (10, 80) is changed, without changing a position of the image display member (10, 80) in a three dimensional space, around an axis that passes a point (S) where the emitting optical axis (PR, PL) of the image projection intersects with the image display member (10, 80).
